(19) **Europäisches Patentamt / European Patent Office / Office européen des brevets**

(11) **EP 3 049 501 B1**

(12) **FASCICULE DE BREVET EUROPEEN**

(45) Date de publication et mention
de la délivrance du brevet:
**05.12.2018 Bulletin 2018/49**

(21) Numéro de dépôt: **14793875.7**

(22) Date de dépôt: **23.09.2014**

(51) Int Cl.:
***C09K 8/54*** *(2006.01)*     ***C23F 11/16*** *(2006.01)*

(86) Numéro de dépôt international:
**PCT/FR2014/052372**

(87) Numéro de publication internationale:
**WO 2015/044576 (02.04.2015 Gazette 2015/13)**

(54) **FORMULATIONS ANTI-CORROSION STABLES AU STOCKAGE**

ANTIKORROSIVE FORMULIERUNGEN MIT LAGERSTABILITÄT

ANTI-CORROSION FORMULATIONS WITH STORAGE STABILITY

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.09.2013 FR 1359145**

(43) Date de publication de la demande:
**03.08.2016 Bulletin 2016/31**

(73) Titulaire: **Arkema France
92705 Colombes (FR)**

(72) Inventeurs:
• **POU, Tong Eak**
 **F-69540 Irigny (FR)**
• **ALONZO, Denis**
 **F-69540 Irigny (FR)**
• **BARRETO, Gilles**
 **F-69510 Messimy (FR)**
• **HISLER, Kevin**
 **69970 Chaponnay (FR)**

(56) Documents cités:
EP-B1- 0 968 323     WO-A1-2008/091429
FR-A1- 2 935 972     GB-A- 2 324 084
JP-A- H07 173 675     US-A- 3 846 139

EP 3 049 501 B1

**EP 3 049 501 B1**

**Description**

La présente invention concerne les formulations inhibitrices de corrosion des métaux utilisées dans l'industrie pétrolière et gazière, et plus spécifiquement dans tout type d'industrie de forage, complétion, stimulation et de production de minerais ou de composés fossiles, tels que gaz, pétrole, bitume et autres.

De telles formulations inhibitrices de corrosion sont déjà largement connues et les plus efficaces d'entre elles comprennent le plus souvent un ou plusieurs dérivés soufrés, notamment choisis parmi les mercapto-alcools et les mercapto-acides. Ainsi, les demandes WO 1998/041673, WO 2013/034846 et WO 2013/038100 décrivent des formulations inhibitrices de corrosion où l'addition de dérivés soufrés, par exemple d'acide thioglycolique, permet d'augmenter la performance desdites formulations inhibitrices. La demande WO 2001/012878 A1 décrit l'utilisation de mercapto-alcool dans le même but d'amélioration de la performance de formulations inhibitrices de corrosion.

Cependant, il a été observé que les formulations inhibitrices de corrosion comprenant un ou plusieurs dérivés soufrés, tels que ceux définis ci-dessus, et en particulier l'acide thioglycolique, sont peu stables au stockage, et ont tendance à développer des odeurs nauséabondes et non désirées.

Ces odeurs nauséabondes sont probablement dues à la décomposition des dérivés soufrés, et, sans être lié par la théorie, on pense aujourd'hui que les dérivés soufrés définis ci-dessus, comme par exemple l'acide thioglycolique, le mercapto-alcool et autres, se décomposent probablement en partie en sulfure d'hydrogène ($H_2S$) à la température de stockage. Plus la température de stockage est élevée plus la décomposition des dérivés soufrés, et en particulier lorsqu'il s'agit d'acide thioglycolique, est importante.

Ce phénomène de décomposition pose des problèmes d'hygiène industrielle et rend ainsi ces formulations inhibitrices de corrosion difficilement utilisables, en raison des odeurs désagréables qui s'en dégagent, voire dangereuses pour les utilisateurs. En effet, le sulfure d'hydrogène est toxique, même à très faibles concentrations dans l'air. Un autre problème lié à l'utilisation de certains des composés soufrés décrits ci-dessus est leur toxicité très élevée qui rend très dangereuse leur manipulation lors de la fabrication desdites formulations inhibitrices de corrosion.

L'industrie gazière et pétrolière utilise déjà certains composés, dits capteurs d'$H_2S$ (« $H_2S$ scavengers » en langue anglaise), où ils sont principalement mis en oeuvre par injection dans les conduites de gaz, de pétrole brut ou d'eau ou fluides aqueux, afin de capter (piéger, ou encore neutraliser) les espèces acides présentes dans lesdites conduites.

Ces espèces acides, souvent corrosives, sont principalement dues à la présence d'humidité et de gaz dits « acides », tels que par exemple le sulfure d'hydrogène ($H_2S$) et le dioxyde de carbone ($CO_2$) en présence d'$H_2S$.

Dans ce domaine, il est aujourd'hui communément établi de classer les capteurs d'$H_2S$ dans deux grandes familles, les capteurs régénérateurs (« regenerative $H_2S$ scavengers » en langue anglaise) et les capteurs non-régénérateurs (« non-regenerative $H_2S$ scavengers » en langue anglaise).

Parmi les capteurs d'$H_2S$ dits « régénérateurs », on peut citer par exemple les alcanolamines comme la mono-éthanolamine, la di-éthanolamine ou encore la méthyléthanolamine.

Parmi les capteurs d'$H_2S$ dits « non-régénérateurs », on peut citer par exemple les triazines et leurs dérivés, les oxydants comme le dioxyde de chlore, les hypochlorites (par exemple eau de Javel), le peroxyde d'hydrogène, les sels de métaux de transition, (tels les sels de fer, cobalt, nickel, chrome, cuivre, zinc, manganèse, et autres), ou encore les aldéhydes, comme le formaldéhyde et le glyoxal.

Il pourrait ainsi être envisagé d'utiliser de tels capteurs d'$H_2S$ pour piéger les sulfures résultant de la décomposition des dérivés soufrés présents dans les compositions inhibitrices de corrosion. Cependant la plupart des capteurs régénérateurs et des capteurs non-régénérateurs souffrent de nombreux inconvénients qui rendent leur utilisation dans les formulations inhibitrices de corrosion peu adaptée.

Ainsi, les dérivés aminés, et en particulier les alcanolamines ne sont pas assez efficaces pour éliminer l'$H_2S$ issu de la dégradation de l'acide thioglycolique. Les oxydants, comme le dioxyde de chlore, l'eau de Javel, ou l'eau oxygénée sont difficilement utilisables en raison de leur corrosivité, qui va à l'encontre du but recherché.

En outre, la formation de solides insolubles avec certains de ces capteurs d'$H_2S$ et l'acide thioglycolique dans les formulations anti-corrosion, rend ces formulations impropres à l'utilisation, tout risque de bouchage et colmatage des canalisations et des tubes d'injection devant être impérativement évité. Par ailleurs les aldéhydes, comme le formaldéhyde et le glyoxal, sont toxiques et on cherche à minimiser, voire éviter leurs utilisations.

Par ailleurs, si ces capteurs d'$H_2S$ sont en général efficaces pour piéger le sulfure d'hydrogène présent dans les conduites de gaz, de pétrole brut ou d'eau ou fluides aqueux, afin de capter (piéger, ou encore neutraliser) les espèces acides présentes dans lesdites conduites, il n'est pas établi que ces capteurs d'$H_2S$ pourraient être efficaces pour stabiliser les formulations inhibitrices de corrosion et empêcher leur décomposition afin d'éviter le dégagement d'$H_2S$.

En outre, l'ajout d'un tel capteur d'$H_2S$ dans les formulations inhibitrices de corrosion correspondrait à une étape supplémentaire lors de la préparation de telles formulations, et ainsi conduirait à une augmentation des coûts de fabrication et de vente de ces formulations.

2

Le document WO 2008/091429 A1 enseigne que la corrosion des métaux ferreux et non-ferreux peut être inhibée ou contrôlée par des formulations inhibitrices de corrosion comprenant au moins un composé de type mercaptan.

Le document GB 2 324 084 A décrit l'utilisation de thiols contenant un groupement amino comme inhibiteurs de corrosion des métaux.

Le document US 3 846 139 A propose une formulation pour éviter la ternissure et faire briller le cuivre et l'argent, ladite formulation contenant un mercaptan, un agent abrasif, un diluant, un agent odorisant et un agent de mise en suspension.

Le document JP H07 173675 A décrit une formulation contenant du mercaptobenzothiazole afin d'améliorer la résistance à la corrosion de la surface de matériaux à base d'étain ou d'alliages à base d'étain, lors des opérations de soudure.

Il reste par conséquent un besoin pour des formulations efficaces du point de vue de l'inhibition de la corrosion, comprenant au moins un composé soufré permettant d'augmenter la performance desdites formulations inhibitrices, qui soient peu ou pas toxiques et/ou nocives, stables au stockage, de préparation aisée et économiquement rentables.

Ainsi un objectif de la présente invention est-il la mise à disposition de formulations anti-corrosion comprenant au moins un dérivé soufré et qui sont stables au stockage, c'est-à-dire qui ne génèrent pas ou peu de mauvaises odeurs dans le temps. Un autre objectif de la présente invention est la mise à disposition de formulations anti-corrosion stables particulièrement adaptées et efficaces pour la prévention et le traitement de la corrosion dans le domaine de l'extraction pétrolière, gazière et de minerais en général.

Un autre objectif de l'invention est la mise à disposition de formulations anti-corrosion stables, adaptées et efficaces pour la prévention et le traitement de la corrosion dans le domaine de l'extraction pétrolière, gazière et de minerais, lesdites formulations étant non-toxiques ou peu toxiques, c'est-à-dire ne comportant pas ou peu de composés qui pourraient s'avérer toxiques, nocifs et/ou néfastes pour l'environnement, ou ne se décomposant pas en composés toxiques, nocifs et/ou néfastes pour l'environnement lors du stockage desdites formulations au cours du temps.

Les inventeurs ont maintenant découvert que les objectifs précités sont atteints en totalité ou au moins en partie grâce aux formulations selon l'invention telle qu'elle va être exposée dans la description qui suit. D'autres objectifs encore apparaîtront dans cette même description.

Ainsi, les formulations anti-corrosion selon la présente invention comprennent au moins un composé soufré spécifique pouvant avantageusement remplacer les composés soufrés communément utilisés dans de telles compositions inhibitrices de corrosion et bien connues de l'art antérieur. Ces composés soufrés spécifiques confèrent une meilleure stabilité au stockage auxdites formulations, la quantité d'$H_2S$ dégagée lors du stockage est abaissée, et les performances d'inhibition de corrosion sont au moins de même niveau, voire de niveau supérieur, par rapport aux formulations inhibitrices de corrosion utilisées aujourd'hui mais qui se sont montrées instables au stockage.

Ainsi, et selon un premier aspect, la présente invention concerne l'utilisation, comme additif dans une formulation inhibitrice de corrosion afin d'en améliorer à la fois l'efficacité anti-corrosion et la stabilité au stockage, d'au moins un composé A qui est le dimercapto-1,8-dioxa-3,6-octane (DMDO).

Le composé A tel qu'il vient d'être défini est particulièrement efficace comme additif dans les formulations anti-corrosion des métaux utilisées dans l'industrie pétrolière et gazière, et plus spécifiquement dans tout type d'industrie de forage, complétion, stimulation et de production de minerais ou de composés fossiles, tels que gaz, pétrole, bitume et autres. Ce composé A permet aux dites formulations anti-corrosion d'être stables lors de leur stockage, mais aussi permet de remplacer avantageusement les dérivés soufrés, généralement présents dans lesdites formulations anti-corrosion dans le but d'en améliorer encore l'efficacité.

Selon un deuxième aspect, la présente invention concerne une formulation inhibitrice de corrosion comprenant :

    a) au moins une amine,
    b) au moins un composé A défini précédemment, et
    c) éventuellement un solvant ou un mélange de deux ou plusieurs solvants ;

dans laquelle le composé a) est choisi parmi les amines, les amines éthoxylées, les amino-acides, les imidazolines et leurs sels, les amines grasses, les amino-acides, amino-alcools, amido-amines, ammoniums quaternaires, les pyridines, les quinolines, les imidazolines substituées par au moins une chaîne grasse, les imidazolines alcoxylées, les ester-amines, les éther-amines, les alkylamines, les amines oxy-alkylées, les bétaïnes et alkylbétaïnes, ainsi que les dérivés N-oxydes des amines précitées.

La formulation inhibitrice de corrosion selon l'invention peut ainsi comprendre un solvant ou un mélange de deux ou plusieurs solvants, le ou les solvants étant de préférence choisis parmi l'eau et les solvants organiques hydrosolubles, et en particulier les solvants organiques de type alcools et/ou glycols.

De manière générale :

- le composant a) représente de 40% à 99,5% en poids, de préférence de 55% à 85% en poids, de préférence encore de 55% à 75% en poids, bornes incluses, par rapport au poids total des composants a) + b) + c),

- le composant b) représente de 0,5% à 30% en poids, de préférence de 2% à 20% en poids, bornes incluses, par rapport au poids total des composants a) + b) + c),
- le composant c) représente de 0% à 59,5% en poids, de préférence de 20% à 59% en poids, de préférence encore de 30% à 59% en poids, bornes incluses, par rapport au poids total des composants a) + b) + c).

Les composants a) des formulations de la présente invention sont les dérivés azotés communément utilisés comme inhibiteurs de corrosion dans l'industrie pétrolière et gazière.

Parmi ces composants a), on peut citer à titre d'exemples non limitatifs les amines, les amines éthoxylées, les amino-acides, les imidazolines, et leurs sels, et en particulier alkyl-imidazo-polyéthylène-amines décrites dans la demande WO 1998/041673, les carboxylates d'imidazoline-amines décrits dans la demande WO 2010/031963, les alkylimidazolines quaternaires, les alkylimidazolines alcoxylées, les amines grasses, les amino-acides, amino-alcools, amido-amines, ammoniums, ammoniums quaternaires, les pyridines les pyridinium, les quinolines , les quinoliniums, les imidazolines substituées par au moins une chaîne grasse, les imidazolines alcoxylées, les ester-amines, les éther-amines décrites dans la demande WO 2013/034846, ou encore la MOPA (méthoxy-3-propylamine), l'EDIPA (N,N-di-*iso*-propyléthylamine), les alkylamines décrites dans la demande WO 2013/038100, ainsi que les amines oxy-alkylées (par exemple oxy-éthylées et/ou oxy-propylées et/ou oxy-butylées) tel que par exemple les Noramox®, et en particulier le Noramox® C11, commercialisés par la société CECA S.A, les bétaïnes et alkylbétaïnes, les dérivés N-oxydes des amines précitées, ainsi que les mélanges de deux ou plusieurs des composés ci-dessus, tels que ceux commercialisés par la société CECA S.A. sous les dénominations commerciales Norust® 97 BX, Norust® 103, Norust® 575, Norust® 740, Prochinor® IC 32, Prochinor® IC 1950, et autres.

Comme indiqué précédemment, les formulations inhibitrices de corrosion connues à ce jour et qui contiennent au moins un composé soufré, en particulier celles contenant de l'acide thioglycolique, se sont souvent montrées instables dans le temps (notamment lors d'un test de stockage à 60°C, pendant 8 jours), dans la mesure où elles s'accompagnaient d'une forte odeur qui pouvait être liée à un dégagement important d'$H_2S$ (supérieur à environ 70 ppm). En raison de ce fort dégagement d'$H_2S$ gazeux et de la toxicité de ce gaz, ces formulations inhibitrices de corrosion ne sont pas utilisables sans protection adaptée.

Ainsi, la suppression partielle ou totale des agents soufrés connus à ce jour et l'ajout d'au moins un composé A (composant b) dans ces formulations permet une meilleure stabilité dans le temps, et une absence quasi-totale de dégagement de mauvaise odeur, en particulier une absence quasi-totale de dégagement d'$H_2S$.

Parmi les composants c) des formulations selon la présente invention, on peut citer, à titre d'exemples non-limitatifs l'eau et les solvants organiques, ainsi que les mélanges d'eau avec au moins un solvant organique. Les solvants organiques qui peuvent être utilisés sont de préférence des solvants organiques hydrosolubles et peuvent être par exemple choisis parmi les alcools et les éthers et plus particulièrement parmi les alcanols et les glycols, plus particulièrement le méthanol, l'éthanol, le glycol, le monoéthylèneglycol (MEG), le diéthylèneglycol (DEG), le triéthylèneglycol (TEG), le 2-butoxyéthanol, et les mélanges de deux ou plusieurs d'entre eux en toutes proportions.

Les formulations selon la présente invention peuvent également comprendre, bien que ceci ne soit pas préféré, un ou plusieurs autres composés porteurs d'au moins un atome de soufre et d'au moins un, de préférence au moins deux, atome(s) de carbone. Parmi ces composés on peut citer en particulier et à titre d'exemples non-limitatifs, les alcools et acides comportant au moins un atome de soufre, en plus particulièrement le mercapto-éthanol, le mercapto-propanol, l'acide thioglycolique, l'acide mercapto-acétique, l'acide mercaptopropionique, pour ne citer que les plus aisément disponibles d'entre eux, l'acide thioglycolique (ATG) étant tout particulièrement préféré, l'association ATG étant tout particulièrement avantageuse. En effet, le DMDO étant stable à haute température (150°C) et l'ATG présentant une certaine instabilité même à température ambiante, une telle association présente un intérêt tout particulièrement intéressant en termes de stabilité et de pouvoir anti-corrosion.

La formulation inhibitrice de corrosion selon la présente invention peut également comprendre un ou plusieurs capteurs d'$H_2S$, et avantageusement ceux choisis parmi les capteurs régénérateurs (« regenerative $H_2S$ scavengers » en langue anglaise) et les capteurs non-régénérateurs (« non-regenerative $H_2S$ scavengers » en langue anglaise), de préférence au moins un capteur non régénérateur, et de préférence encore choisi parmi les triazines et leurs dérivés, les oxydants comme le dioxyde de chlore, les hypochlorites (par exemple eau de Javel), le peroxyde d'hydrogène, les sels de métaux de transition, (tels les sels de fer, cobalt, nickel, chrome, cuivre, zinc, manganèse, et autres), ou encore les aldéhydes, comme le formaldéhyde et le glyoxal.

La quantité de capteur(s) d'$H_2S$, et en particulier de composé(s) porteur d'au moins un motif triazine, dans la formulation inhibitrice de corrosion de la présente invention peut varier dans de grandes proportions selon la nature et la quantité des autres composants présents dans ladite formulation et est généralement comprise entre 0,5% en poids et 10% en poids, de préférence entre 0,5% et 5% en poids, par exemple environ 2% en poids, par rapport au poids total de la formulation.

Les formulations selon la présente invention peuvent en outre comprendre un ou plusieurs autres additifs, charges, et autres, inertes vis-à-vis de l'efficacité de l'activité inhibitrice de corrosion et bien connus de l'homme du métier dans le domaine de l'extraction des hydrocarbures et autres minerais fossiles ou minéraux. Parmi ces additifs, on peut citer, de manière non limitative, les stabilisants, les conservateurs, les agents anti-U.V., les ignifugeants, les colorants, d'autres capteurs d'$H_2S$ (comme définis précédemment, tels que les aldéhydes, et par exemple et de manière non limitative le formaldéhyde ou le glyoxal) et autres.

La quantité ajoutée de ce(s) additif(s) peut varier dans de grandes proportions, selon l'effet désiré, les réglementations en vigueur, les conditions requises de solubilité, de compatibilité, et autres. En règle générale, cette quantité varie de quelques ppm en poids à quelques pourcents en poids, par rapport au poids total de la formulation de l'invention.

Selon encore un autre aspect, les compositions de la présente invention telles qu'elles viennent d'être définies peuvent être utilisées seules, en association, ou en mélange ou en formulation avec un ou plusieurs autres inhibiteurs, destinés à inhiber d'autres types de corrosion rencontrés dans le domaine de l'extraction des hydrocarbures, par exemple corrosion rencontrée lors de la réinjection d'eau, la fracturation hydraulique, l'acidification, le forage comme par exemple les alcools acétyléniques, ou encore destinés à inhiber la formation d'hydrates ou leur agglomération, à éviter, ou empêcher l'apparition de dépôts, à éviter, ou empêcher le développement de bactéries, à favoriser l'écoulement, et autres.

La quantité ajoutée de ce ou ces autres inhibiteur(s) peut varier dans de grandes proportions, selon l'effet désiré, les réglementations en vigueur, les conditions requises de solubilité, de compatibilité, et autres. En règle générale, cette quantité varie de 0,1% à 60%, généralement de 0,5% en poids à 40% en poids, de préférence de 1% à 20% en poids, par rapport au poids total de formulation. Ces proportions peuvent toutefois être différentes en fonction de l'effet inhibiteur souhaité, et par exemple, pour les inhibiteurs permettant d'éviter la formation ou l'agglomération d'hydrates, la proportion entre la masse desdits inhibiteurs d'hydrates et celle des composants a), b) et c) et éventuellement d) peut atteindre un rapport pondéral de 30 000 pour 10.

Selon un mode de réalisation de la présente invention, les formulations inhibitrices de corrosion contiennent au moins une composition anti-dépôt de minéraux, ladite composition anti-dépôt comprenant par exemple et à titre non limitatif au moins un composé choisi parmi les amino-phosphonates acides ou neutralisés, les poly(acides acryliques), les poly(acrylates d'alkyle), les copolymères à base d'acides phosphino-carboxyliques, les tanins, les lignosulfonates, les polyacrylamides, les naphtalène-sulfonates, et autres, comme par exemple décrit dans la demande WO 2013/034846.

Les formulations anti-corrosion selon l'invention peuvent être préparées par tous moyens connus, et en général par simple mélange des divers composants desdites compositions dans un ordre quelconque.

Grâce à la présente invention, il est maintenant possible de disposer de formulations inhibitrices de corrosion comprenant un produit soufré, qui sont stables au stockage, qui ne développent pas d'odeurs nauséabondes au stockage, qui ne dégagent pas de gaz toxique, en particulier pas d'$H_2S$. En outre, les performances anti-corrosion des formulations inhibitrices de corrosion selon l'invention sont améliorées, en comparaison avec les formulations correspondantes communément utilisées et connues à ce jour de l'homme du métier.

Ainsi, et selon encore un autre aspect, la présente invention concerne l'utilisation d'au moins une formulation inhibitrice de corrosion selon l'invention pour le traitement, avantageusement le traitement préventif de la corrosion des conduites métalliques corrodables au contact de milieux corrosifs dans l'industrie pétrolière, gazière et minière.

En effet, lors de l'extraction des hydrocarbures (ou production des hydrocarbures), plus particulièrement lors de l'extraction de pétrole brut ou de l'extraction de gaz des couches souterraines, voire de minerais, on produit généralement simultanément avec les hydrocarbures ou les minerais, de l'eau et des gaz qui sont remontés vers la surface. La présence d'eau, en quantités plus ou moins importantes, est ainsi inhérente à l'extraction d'hydrocarbures et de minerais en sous-sol, et est à l'origine de nombreux problèmes qui viennent perturber les lignes de production.

En effet, cette présence d'eau, notamment en présence des gaz extraits, est très souvent responsable de la corrosion des tuyaux, canalisations, tubes, vannes et autres éléments métalliques. En outre, dans certains cas, cette eau est ré-injectée dans les couches souterraines comme auxiliaire d'extraction.

Les formulations inhibitrices de corrosion selon la présente invention trouvent ainsi une utilisation tout à fait avantageuse dans tous les domaines de l'industrie pétrolière et gazière, et plus spécifiquement dans tout type d'industrie de forage, complétion, stimulation et de production de minerais ou de composés fossiles, tels que gaz, pétrole, bitume et autres, tels que par exemple, et de manière non limitative dans les techniques de forage, de fracturation par injection de fluide, d'acidification des réservoirs de composés fossiles, d'injection de fluides dans les réservoirs souterrains contenant des composés fossiles, ainsi que dans les techniques de leurs productions et récupérations assistées.

Ces formulations peuvent être injectées selon toutes méthodes bien connues de l'homme du métier, en continu, en batch ou en squeeze, de préférence en continu, dans les lignes d'extraction, dans les lignes d'injection des eaux de production, et de manière générale dans tout fluide aqueux, organique ou hydro-organique mis en oeuvre dans les champs d'extraction. On peut par exemple également injecter ces formulations via le système dit « gas-lift », bien connu de l'homme du métier.

La quantité injectée de formulation(s) inhibitrice(s) de corrosion selon l'invention peut varier dans de grandes proportions, selon les besoins et la nature et la composition des produits extraits. En règle générale la quantité injectée est comprise entre 1 ppm et 1000 ppm, de préférence entre 50 ppm et 800 ppm, où « ppm » représente des parties en poids de formulation(s) inhibitrice(s) de corrosion pour un million de parties en volume de fluide aqueux, organique ou hydro-organique à traiter.

La formulation inhibitrice de corrosion selon l'invention est efficace sur tous les métaux corrodables présents dans les domaines précités d'industrie de forage, complétion, stimulation et de production de minerais ou de composés fossiles. La formulation inhibitrice de corrosion de l'invention s'est montrée particulièrement efficace pour l'inhibition de la corrosion des aciers de tous types, et, notamment les aciers alliés, et tout particulièrement les alliages avec le nickel, le chrome, le molybdène, le silicium, le titane et le vanadium, mais aussi les aciers inoxydables martensitiques et austénitiques, et autres.

Les exemples suivants, non limitatifs, permettent d'illustrer et de mieux comprendre l'invention, sans en limiter la portée.

## EXEMPLES

### Méthodes de mesure

#### Mesure de la quantité d'$H_2S$ dégagée

Dans un flacon de 100 mL sont introduits 50 mL de formulation inhibitrice de corrosion à tester. Le flacon est fermé hermétiquement et conservé à 60°C pendant huit jours. La quantité d'$H_2S$ dégagée est ensuite mesurée en prélevant un échantillon de phase gazeuse à l'aide d'une pompe munie d'un tube Dräger. Le gaz passe à travers le tube dont le changement de couleur indique la quantité d'$H_2S$ dégagée.

#### Mesure de la vitesse de corrosion

L'efficacité anti-corrosion est exprimée sous forme de vitesse de corrosion d'un acier au carbone en fonction du temps. La vitesse de corrosion est déterminée par la méthode dite LPR (« Linear Polarization Résistance ») en utilisant un système à trois électrodes, une électrode de travail en acier au carbone, une électrode de référence au calomel saturé et une contre-électrode en platine. Ces trois électrodes sont placées dans une cellule de corrosion en verre à double enveloppe contenant 700 mL de milieu corrosif, préalablement désaéré par barbotage d'azote, puis saturée par barbotage de $CO_2$. Le barbotage de $CO_2$ est maintenu pendant toute la durée de l'expérience.

L'efficacité de l'inhibiteur de corrosion est exprimée en pourcentage d'efficacité, selon la relation suivante :

$$\%\text{Eff (IC)} = \frac{[(\text{Vcor1}) - (\text{Vcor2})]}{(\text{Vcor1})} \times 100$$

où : %Eff (IC) représente le pourcentage d'efficacité de la formulation anti-corrosion, Vcor1 représente la vitesse de corrosion en absence de formulation anti-corrosion et Vcor2 représente la vitesse de corrosion en présence de formulation anti-corrosion.

Les vitesses de corrosion en absence et en présence de formulation anti-corrosion sont mesurées et suivies en fonction du temps à l'aide d'un potentiostat Gamry. En présence d'inhibiteur de corrosion, plus la vitesse de corrosion est faible plus l'inhibiteur est efficace.

**Exemple 1 :** Tests sur une formulation inhibitrice de corrosion (Référence 1)

La température de travail est de 80°C. Les essais sont réalisés par introduction de 25 ppm (poids/volume) de formulation inhibitrice de corrosion. Le milieu corrosif est une solution synthétique à 1 g.L$^{-1}$ de chlorure de sodium (NaCl), c'est-à-dire une solution de même composition que l'eau du site où il y a corrosion. Ce milieu est saturé par barbotage de $CO_2$ tout au long de l'expérience. La température de travail est de 80°C.

Les formulations anti-corrosion testées sont détaillées dans le tableau 1 suivant, où les pourcentages sont exprimés en poids :

-- Tableau 1 --

| Formulation | Réf. R1 sans ATG | Réf. R1 + ATG | Réf. R1 + DMDO | Réf. R1 + MEE | Réf. R1 + Norust® GL 50 |
|---|---|---|---|---|---|
| Norust® 97 BX formulé sans ATG | 100 | 95 | 95 | 95 | 95 |

(suite)

| Formulation | Réf. R1 sans ATG | Réf. R1 + ATG | Réf. R1 + DMDO | Réf. R1 + MEE | Réf. R1 + Norust® GL 50 |
|---|---|---|---|---|---|
| Acide thioglycolique | - | 5 | - | - | - |
| DMDO | - | - | 5 | - | - |
| MEE | - | - | - | 5 | - |
| Norust® GL 50 | - | - | - | - | 5 |

Les résultats du test de stabilité au stockage (dégagement $H_2S$) et du test d'efficacité anti-corrosion sont présentés dans le Tableau 2 suivant :

-- Tableau 2 --

| Formulation testée | Quantité $H_2S$ dégagée (ppm) | Efficacité anti-corrosion (%) |
|---|---|---|
| Réf. R1 sans ATG | 0 | 38 |
| Réf. R1 + ATG | > 200 | 96 |
| Réf. R1 + DMDO | 2 | 98 |
| Réf. R1 + MEE | 20 | 96 |
| Réf. R1 + Norust® GL 50 | 0 | 96 |

Ces résultats montrent que la formulation inhibitrice de corrosion ne contenant pas de composé soufré (Référence 1) ne présente qu'une faible efficacité contre la corrosion, tout à fait insuffisante. Cette même formulation contenant de l'acide thioglycolique est quant à elle efficace du point de vue de la corrosion, mais est fortement instable et dégage une quantité importante d'$H_2S$.

En revanche, les formulations selon l'invention (Référence 1 + composé A) présentent non seulement une efficacité anti-corrosion tout à fait comparable à celle contenant l'acide thioglycolique, mais aussi se montrent très stables avec des quantités de sulfure d'hydrogène dégagées très faibles, voire nulles.

**Exemple 2 :** Tests sur une formulation inhibitrice de corrosion (Référence 2)

Une nouvelle série de tests, comme décrits dans l'exemple 1 ci-dessus, est réalisée à partir des formulations anti-corrosion détaillées dans le tableau 3 suivant, où les pourcentages sont exprimés en poids :

-- Tableau 3 --

| Formulation | Réf. R2 sans ATG | Réf. R2 + ATG +TGNa | Réf. R2 + DMDO | Réf. R2 + MEE | Réf. R2 + Norust® GL 50 |
|---|---|---|---|---|---|
| Prochinor® IC 1950 formulé sans ATG | 100 | 80 | 80 | 80 | 80 |
| ATG + thioglycolate de sodium | - | 20 | | | |
| DMDO | - | - | 20 | - | - |
| MEE | - | - | - | 20 | - |
| Norust® GL 50 | - | - | - | - | 20 |

Les résultats du test de stabilité au stockage (dégagement $H_2S$) et du test d'efficacité anti-corrosion sont présentés dans le Tableau 4 suivant :

-- Tableau 4 --

| Formulation testée | Quantité H$_2$S dégagée (ppm) | Efficacité anti-corrosion (%) |
|---|---|---|
| Réf. R2 sans ATG | 0 | 47 |
| Réf. R2 + ATG + TGNa | > 200 | 97 |
| Réf. R2 + DMDO | 0 | 99 |
| Réf. R2 + MEE | 0 | 97 |
| Réf. R2 + Norust® GL 50 | 0 | 97 |

Ces résultats montrent également que la formulation inhibitrice de corrosion ne contenant pas de composé soufré (Référence 2) ne présente qu'une faible efficacité contre la corrosion, tout à fait insuffisante. Cette même formulation contenant de l'acide thioglycolique est quant à elle efficace du point de vue de la corrosion, mais est fortement instable et dégage une quantité importante d'H$_2$S.

En revanche, les formulations selon l'invention (Référence 2 + composé A) présentent non seulement une efficacité anti-corrosion tout à fait comparable à celle contenant l'acide thioglycolique, mais aussi se montrent très stables avec une absence de dégagement de sulfure d'hydrogène.

**Exemple 3 :** Tests basés sur une formulation 2-en-1 anti-corrosion et anti-dépôt de minéraux

Une autre série de tests est effectuée à partir d'une formulation 2-en-1 (anti-corrosion + anti-dépôt). La température de travail est de 80°C. Les essais sont réalisés par introduction de 50 ppm (poids/volume) de formulation inhibitrice de corrosion à tester, dans un milieu corrosif et susceptible de générer des dépôts, de composition suivante et saturé par barbotage de CO$_2$ tout au long de l'expérience :

|  | quantité en g.L$^{-1}$ |
|---|---|
| SrCl$_2$, 6H$_2$O : | 0,47 |
| BaCl$_2$, 2H$_2$O : | 0,27 |
| MgCl$_2$, 6H$_2$O : | 25,65 |
| KCl : | 0,63 |
| CaCl$_2$, 2H$_2$O : | 4,09 |
| NaHCO$_3$ : | 1,42 |
| NaCl : | 94,08 |

Les formulations anti-corrosion/anti-dépôt testées sont détaillées dans le tableau 5 suivant, où les pourcentages sont exprimés en poids :

-- Tableau 5 --

| Formulation | Réf. R3 | Réf. R3 + ATG | Réf. R3 + DMDO | Réf. R3 + MEE | Réf. R3 + Norust® GL 50 |
|---|---|---|---|---|---|
| Prochinor® IC 32 | 4,5 | 4,5 | 4,5 | 4,5 | 4,5 |
| Norust® 103 | 12,0 | 12,0 | 12,0 | 12,0 | 12,0 |
| Norust® 575 | 4,5 | 4,5 | 4,5 | 4,5 | 4,5 |
| Inipol AD® 425C | 18,0 | 18,0 | 18,0 | 18,0 | 18,0 |
| Acide thioglycolique | - | 4,5 | - | - | - |
| DMDO | - | - | 4,5 | - | - |
| MEE | - | - | - | 4,5 | - |
| Norust® GL 50 | - | - | - | - | 4,5 |
| solvant organique | q.s.p. | q.s.p. | q.s.p. | q.s.p. | q.s.p. |

où Inipol® AD 425C est un additif anti-dépôt commercialisé par la société CECA, et « q.s.p. » signifie « quantité suffisante pour atteindre 100% ».

Les résultats du test de stabilité au stockage (dégagement H₂S) et du test d'efficacité anti-corrosion sont présentés dans le Tableau 6 suivant :

-- Tableau 6 --

| *Formulation testée* | *Quantité H₂S dégagée (ppm)* | *Efficacité anti-corrosion (%)* |
|---|---|---|
| *Réf. R3* | 0 | 82 |
| *Réf. R3 + ATG* | > 200 | 98 |
| *Réf. R3 + DMDO* | 2 | 99 |
| *Réf. R3 + MEE* | 20 | 98 |
| *Réf. R3 + Norust® GL 50* | 0 | 99 |

Ici encore, les résultats montrent que la formulation inhibitrice de corrosion ne contenant pas de composé soufré (Référence 3) présente une faible efficacité anti-corrosion. Cette même formulation contenant de l'acide thioglycolique est quant à elle efficace du point de vue de la corrosion, mais est fortement instable et dégage une quantité importante d'H₂S.

En revanche, les formulations selon l'invention (Référence 3 + composé A) présentent non seulement une efficacité anti-corrosion tout à fait comparable à celle contenant l'acide thioglycolique, mais aussi se montrent très stables avec des quantités de sulfure d'hydrogène dégagées très faibles, voire nulles.

Les résultats des tests présentés ci-dessus montrent ainsi les très grands avantages apportés par l'ajout, dans une composition inhibitrice de corrosion, d'au moins un composé A, à la fois en ce qui concerne la stabilité de ladite formulation qui ne dégage que peu, voire pas, d'hydrogène sulfuré, de sa faible toxicité, et de sa très grande efficacité anti-corrosion, tout à fait comparable aux formulations équivalentes contenant de l'acide thioglycolique, qui sont instables, dégagent de l'hydrogène sulfuré et qui présentent donc une toxicité non négligeable.

## Revendications

1. Utilisation, comme additif dans une formulation inhibitrice de corrosion, afin d'en améliorer à la fois l'efficacité anti-corrosion et la stabilité au stockage, d'au moins un composé A qui est le dimercapto-1,8-dioxa-3,6-octane (DMDO).

2. Formulation inhibitrice de corrosion comprenant :

   a) au moins une amine,
   b) au moins un composé A défini dans la revendication 1, et
   c) éventuellement un solvant ou un mélange de deux ou plusieurs solvants ;

   dans laquelle le composé a) est choisi parmi les amines, les amines éthoxylées, les amino-acides, les imidazolines et leurs sels, les amines grasses, les amino-acides, amino-alcools, amido-amines, ammoniums quaternaires, les pyridines, les quinolines, les imidazolines substituées par au moins une chaîne grasse, les imidazolines alcoxylées, les ester-amines, les éther-amines, les alkylamines, les amines oxy-alkylées, les bétaïnes et alkylbétaïnes, ainsi que les dérivés N-oxydes des amines précitées.

3. Formulation selon la revendication 2, dans laquelle

   • le composant a) représente de 40% à 99,5% en poids, de préférence de 55% à 85% en poids, de préférence encore de 55% à 75% en poids, bornes incluses, par rapport au poids total des composants a) + b) + c),
   • le composant b) représente de 0,5% à 30% en poids, de préférence de 2% à 20% en poids, bornes incluses, par rapport au poids total des composants a) + b) + c),
   • le composant c) représente de 0% à 59,5% en poids, de préférence de 20% à 59% en poids, de préférence encore de 30% à 59% en poids, bornes incluses, par rapport au poids total des composants a) + b) + c).

4. Formulation selon l'une quelconque des revendications 2 à 3, dans laquelle le composant c) est choisi parmi l'eau, les solvants organiques, et les mélanges d'eau avec au moins un solvant organique.

**5.** Formulation selon l'une quelconque des revendications 2 à 4, comprenant en outre un ou plusieurs autres inhibiteurs, destinés à inhiber d'autres types de corrosion rencontrés dans le domaine de l'extraction des hydrocarbures, ou encore destinés à inhiber la formation d'hydrates ou leur agglomération, à éviter, ou empêcher l'apparition de dépôts, à éviter, ou empêcher le développement de bactéries, à favoriser l'écoulement.

**6.** Utilisation d'au moins une formulation inhibitrice de corrosion selon l'une quelconque des revendications 2 à 5, pour le traitement, avantageusement le traitement préventif de la corrosion des conduites métalliques corrodables au contact de milieux corrosifs dans l'industrie pétrolière, gazière et minière.

**Patentansprüche**

**1.** Verwendung, als Additiv in einer antikorrosiven Formulierung, um gleichzeitig die antikorrosive Wirksamkeit und die Lagerstabilität davon zu verbessern, mindestens einer Verbindung A, die Dimercapto-1,8-dioxa-3,6-octan (DMDO) ist.

**2.** Antikorrosive Formulierung, umfassend:

    a) mindestens ein Amin,
    b) mindestens eine Verbindung A, wie in Anspruch 1 definiert, und
    c) gegebenenfalls ein Lösungsmittel oder eine Mischung von zwei oder mehr Lösungsmitteln;

wobei die Verbindung a) ausgewählt ist aus Aminen, ethoxylierten Aminen, Aminosäuren, Imidazolinen und ihren Salzen, Fettaminen, Aminosäuren, Aminoalkoholen, Amidoaminen, quaternären Ammoniumverbindungen, Pyridinen, Chinolinen, Imidazolinen, substituiert mit mindestens einer Fettkette, alkoxylierten Imidazolinen, Esteraminen, Etheraminen, Alkylaminen, oxyalkylierten Aminen, Betainen und Alkylbetainen sowie N-Oxid-Derivaten der vorgenannten Amine.

**3.** Formulierung nach Anspruch 2, wobei:

    • der Bestandteil a) von 40 Gew.-% bis 99,5 Gew.-%, vorzugsweise von 55 Gew.-% bis 85 Gew.-%, bevorzugter von 55 Gew.-% bis 75 Gew.-%, einschließlich der Grenzen, im Verhältnis zum Gesamtgewicht der Bestandteile a) + b) + c) darstellt,
    • der Bestandteil b) von 0,5 Gew.-% bis 30 Gew.-%, vorzugsweise von 2 Gew.-% bis 20 Gew.-%, einschließlich der Grenzen, im Verhältnis zum Gesamtgewicht der Bestandteile a) + b) + c) darstellt,
    • der Bestandteil c) von 0 Gew.-% bis 59,5 Gew.-%, vorzugsweise von 20 Gew.-% bis 59 Gew.-%, bevorzugter von 30 Gew.-% bis 59 Gew.-%, einschließlich der Grenzen, im Verhältnis zum Gesamtgewicht der Bestandteile a) + b) + c) darstellt.

**4.** Formulierung nach einem der Ansprüche 2 bis 3, wobei der Bestandteil c) ausgewählt ist aus Wasser, organischen Lösungsmitteln und Mischen von Wasser mit mindestens einem organischen Lösungsmittel.

**5.** Formulierung nach einem der Ansprüche 2 bis 4, außerdem umfassend einen oder mehrere andere Inhibitoren, die dazu bestimmt sind, andere Typen einer Korrosion zu hemmen, die auf dem Gebiet der Extraktion von Kohlenwasserstoffen angetroffen werden, oder auch dazu bestimmt sind, die Bildung von Hydraten oder ihre Agglomeration zu hemmen, das Auftreten von Ablagerungen zu vermeiden oder zu verhindern, die Entwicklung von Bakterien zu vermeiden oder zu verhindern, das Fließen zu begünstigen.

**6.** Verwendung mindestens einer antikorrosiven Formulierung nach einem der Ansprüche 2 bis 5, bei der Behandlung, vorteilhaft der präventiven Behandlung, der Korrosion von korrodierbaren Metallleitungen in Kontakt mit korrosiven Medien in der Erdöl-, Erdgasindustrie und im Bergbau.

**Claims**

**1.** Use, as additive in a corrosion-inhibiting formulation, in order to improve both the anti-corrosion efficacy and the storage stability, of at least one compound A, which is dimercapto-1,8-dioxa-3,6-octane (DMDO).

2. Corrosion-inhibiting formulation, comprising:

   a) at least one amine,
   b) at least one compound A, defined in Claim 1, and
   c) optionally a solvent or a mixture of two or more solvents;

   wherein the compound a) is chosen from amines, ethoxylated amines, amino acids, imidazolines and salts thereof, fatty amines, amino acids, amino alcohols, amidoamines, quaternary ammoniums, pyridines, quinolines, imidazolines substituted with at least one fatty chain, alkoxylated imidazolines, ester amines, ether amines, alkylamines, oxy-alkylated amines, betaines and alkylbetaines, and also N-oxide derivatives of the abovementioned amines.

3. Formulation according to Claim 2, wherein

   • the component a) represents from 40% to 99.5% by weight, preferably from 55% to 85% by weight, more preferably still from 55% to 75% by weight, limit values included, relative to the total weight of the components a) + b) + c),
   • the component b) represents from 0.5% to 30% by weight, preferably from 2% to 20% by weight, limit values included, relative to the total weight of the components a) + b) + c),
   • the component c) represents from 0% to 59.5% by weight, preferably from 20% to 59% by weight, more preferably still from 30% to 59% by weight, limit values included, relative to the total weight of the components a) + b) + c).

4. Formulation according to either one of Claims 2 and 3, wherein the component c) is selected from water, organic solvents, and mixtures of water with at least one organic solvent.

5. Formulation according to any one of Claims 2 to 4, also comprising one or more other inhibitors, intended to inhibit other types of corrosion encountered in the field of hydrocarbon extraction, or else intended to inhibit the formation of hydrates or the agglomeration thereof, to avoid or prevent the appearance of deposits, to avoid or prevent bacterial growth, or to promote flow.

6. Use of at least one corrosion-inhibiting formulation according to any one of Claims 2 to 5, for treating, advantageously preventatively treating, the corrosion of metal conduits that are corrodible on contact with corrosive media in the oil, gas and mining industry.

## RÉFÉRENCES CITÉES DANS LA DESCRIPTION

**Documents brevets cités dans la description**

- WO 1998041673 A
- WO 2013034846 A
- WO 2013038100 A
- WO 2001012878 A1
- WO 2008091429 A1
- GB 2324084 A
- US 3846139 A
- JP H07173675 A
- WO 2010031963 A